# EUROPEAN PATENT APPLICATION

(11) **EP 4 542 393 A1**
(43) Date of publication of application: **23.04.2025**
(21) Application number: 24207196.7
(22) Date of filing: 17.10.2024
(51) Int. Cl.: G06F 9/50

(54) **AUTOMATED REMEDIATION OF RELOCATED WORKLOADS**

(30) Priority: 20.10.2023 US 202318382367
(71) Applicant: VMware LLC, Palo Alto, CA 94304 (US)
(72) Inventor: Chasse, Derek, Windham, 03087 (US); Vyas, Rushikesh, Burlington, 01803 (US); Chugh, Poonam, Burlington, 01803 (US); Duffy, Evan, Burlington, 01803 (US); Abbot, Addison, Beverly, 01915 (US); Deepshikha, Kumari, Burlington, 01803 (US)
(74) Representative: Dilg, Haeusler, Schindelmann Patentanwaltsgesellschaft mbH

(57) **Abstract**

System and computer-implemented method for detecting and reconciling moved workloads for a management component in a computing environment determines workloads that have moved as moved workloads based on received data at the management component. For a first moved workload with an associated workload, workload metadata is swapped with the associated workload and the first moved workload is updated in the management component. For a second moved workload without an associated workload, the second moved workload is preserved as preserved workloads for further processing.

## Description

### BACKGROUND

An infrastructure automation platform, such as VMware vRealize Automation, may be designed to help users automate and streamline the deployment and management of their infrastructure and applications in any computing environment, such as a private, public or hybrid cloud computing environment. An infrastructure automation platform may provide a set of tools and capabilities to automate and orchestrate various information technology (IT) processes, such as provisioning virtual machines, managing containers, and deploying applications.

In order to manage the various components in a computing environment, an infrastructure automation platform keeps track of movements of these components within the computing environment. However, there may be other management entities in the computing environment that orchestrate movement or replication of the components from one location to another location for various purposes, such as site recovery and load balancing, which may involve deleting the original components. Thus, the infrastructure automation platform may be unable or have difficulty in keeping track of all the components in the computing environment.

### SUMMARY

System and computer-implemented method for detecting and reconciling moved workloads for a management component in a computing environment determines workloads that have moved as moved workloads based on received data at the management component. For a first moved workload with an associated workload, workload metadata is swapped with the associated workload and the first moved workload is updated in the management component. For a second moved workload without an associated workload, the second moved workload is preserved as preserved workloads for further processing.

A computer-implemented method for detecting and reconciling moved workloads for a management component in a computing environment in accordance with an embodiment of the invention comprises receiving data for workloads in the computing environment at the management component, determining the workloads that have moved as moved workloads based on the received data, searching for associated workloads for the moved workloads, for a first moved workload with an associated workload, swapping workload metadata with the associated workload and updating the first moved workload in the management component, and for a second moved workload without an associated workload, preserving the second moved workload as preserved workloads for further processing. In some embodiments, the steps of this method are performed when program instructions contained in a computer-readable storage medium are executed by one or more processors.

A system in accordance with an embodiment of the invention comprises memory and one or more processors configured to receive data for workloads in a computing environment at a management component, determine the workloads that have moved as moved workloads based on the received data, search for associated workloads for the moved workloads, for a first moved workload with an associated workload, swap workload metadata with the associated workload and updating the first moved workload in the management component, and for a second moved workload without an associated workload, preserve the second moved workload as a preserved workload for further processing.

Other aspects and advantages of embodiments of the present invention will become apparent from the following detailed description, taken in conjunction with the accompanying drawings, illustrated by way of example of the principles of the invention.

### BRIEF DESCRIPTION OF THE DRAWINGS

Fig. 1 is a block diagram of a cloud system in which embodiments of the invention may be implemented.
Figs. 2A and 2B illustrate a workload movement executed by a site recovery system that is detected and reconciled by a workload remediation system in the cloud system depicted in Fig. 1 in accordance with an embodiment of the invention.
Figs. 3A and 3B illustrate a workload movement executed by a cluster management center that is detected and reconciled by a workload remediation system in the cloud system depicted in Fig. 1 in accordance with an embodiment of the invention.
Fig. 4 shows components of the workload remediation system in accordance with an embodiment of the invention.
Fig. 5 is a flow diagram of an overall process of detection and reconciliation/preservation of a moved workload in accordance with an embodiment of the invention.
Fig. 6 is a flow diagram of a detection and reconciliation/preservation operation for an updated workload in accordance with an embodiment of the invention.
Fig. 7 is a flow diagram of a detection and reconciliation/preservation operation for a deleted workload in accordance with an embodiment of the invention.
Fig. 8 is a flow diagram of a workload movement detection performed by a workload movement detector of the workload remediation system in accordance with an embodiment of the invention.
Fig. 9 is a flow diagram of a process of reconciliation/preservation of preserved workload executed by a preserved workload processor of the workload remediation system in accordance with an embodiment of the invention.
Fig. 10 is a process flow diagram of a computer-implemented method for detecting and reconciling moved workloads for a management component in a computing environment in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

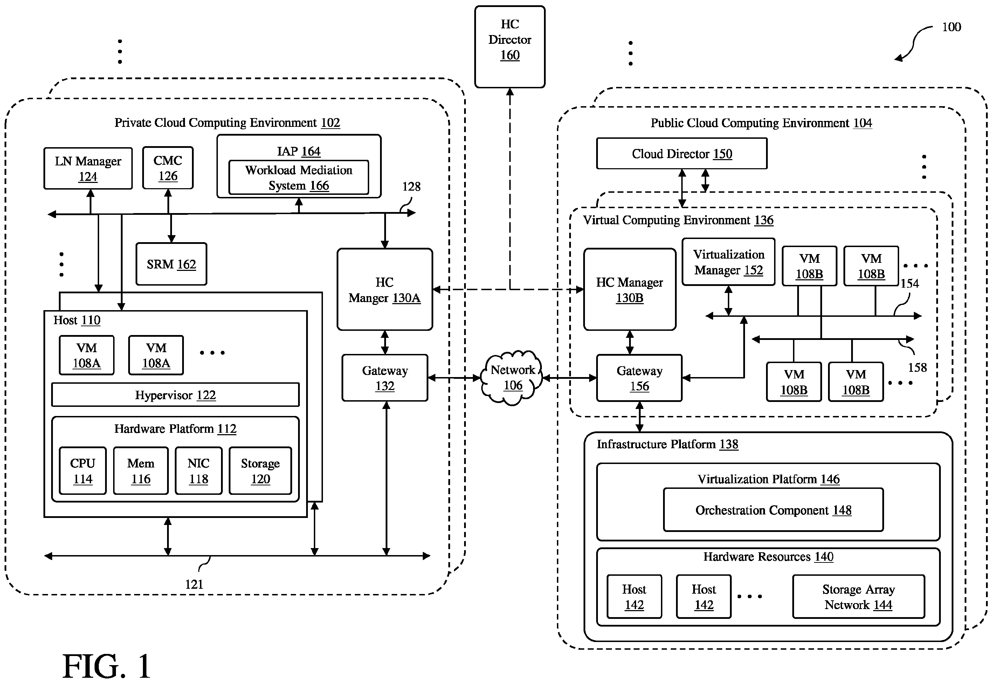

Turning now to Fig. 1, a block diagram of a cloud system 100 in which embodiments of the invention may be implemented in accordance with an embodiment of the invention is shown. The cloud system 100 includes one or more private cloud computing environments 102 and one or more public cloud computing environments 104 that are connected via a network 106. The cloud system 100 is configured to provide a common platform for managing and executing operations seamlessly between the private and public cloud computing environments. Thus, the cloud system 100 is a multi-cloud computing environment. In one embodiment, one or more private cloud computing environments 102 may be controlled and administrated by a particular enterprise or business organization, while one or more public cloud computing environments 104 may be operated by a cloud computing service provider and exposed as a service available to account holders, such as the particular enterprise in addition to other enterprises. In some embodiments, one or more private cloud computing environments 102 may form a private or on-premise software-defined data center (SDDC). In other embodiments, the on-premise SDDC may be extended to include one or more computing environments in one or more public cloud computing environments 104. Thus, as used herein, SDDCs refers to SDDCs that are formed from multiple cloud computing environments, which may be form by multiple private cloud computing environments, multiple public cloud computing environments or any combination of private and public cloud computing environments.

The private and public cloud computing environments 102 and 104 of the cloud system 100 include computing and/or storage infrastructures to support a number of virtual computing instances 108A and 108B. As used herein, the term "virtual computing instance" refers to any software processing entity that can run on a computer system, such as a software application, a software process, a virtual machine (VM), e.g., a VM supported by virtualization products of VMware, Inc., and a software "container", e.g., a Docker container. However, in this disclosure, the virtual computing instances will be described as being virtual machines, although embodiments of the invention described herein are not limited to virtual machines.

In an embodiment, the cloud system 100 supports migration of the virtual machines 108A and 108B between any of the private and public cloud computing environments 102 and 104. The cloud system 100 may also support migration of the virtual machines 108A and 108B between different sites situated at different physical locations, which may be situated in different private and/or public cloud computing environments 102 and 104 or, in some cases, the same computing environment.

As shown in Fig. 1, each private cloud computing environment 102 of the cloud system 100 includes one or more host computer systems ("hosts") 110. The hosts may be constructed on a server grade hardware platform 112, such as an x86 architecture platform. As shown, the hardware platform of each host may include conventional components of a computing device, such as one or more processors (e.g., CPUs) 114, system memory 116, a network interface 118, storage system 120, and other I/O devices such as, for example, a mouse and a keyboard (not shown). The processor 114 is configured to execute instructions, for example, executable instructions that perform one or more operations described herein and may be stored in the memory 116 and the storage 120. The memory 116 is volatile memory used for retrieving programs and processing data. The memory 116 may include, for example, one or more random access memory (RAM) modules. The network interface 118 enables the host 110 to communicate with another device via a communication medium, such as a network 121 within the private cloud computing environment. The network interface 118 may be one or more network adapters, also referred to as a Network Interface Card (NIC). The storage 120 represents local storage devices (e.g., one or more hard disks, flash memory modules, solid state disks and optical disks), which may be used as part of a virtual storage area network.

Each host 110 may be configured to provide a virtualization layer that abstracts processor, memory, storage and networking resources of the hardware platform 112 into the virtual computing instances, e.g., the virtual machines 108A, that run concurrently on the same host. The virtual machines run on top of a software interface layer, which is referred to herein as a hypervisor 122, that enables sharing of the hardware resources of the host by the virtual machines. One example of the hypervisor 122 that may be used in an embodiment described herein is a VMware ESXi^{™} hypervisor provided as part of the VMware vSphere^{®} solution made commercially available from VMware, Inc. The hypervisor 122 may run on top of the operating system of the host or directly on hardware components of the host. For other types of virtual computing instances, the host may include other virtualization software platforms to support those virtual computing instances, such as Docker virtualization platform to support software containers.

Each private cloud computing environment 102 includes at least one logical network manager 124 (which may include a control plane cluster), which operates with the hosts 110 to manage and control logical overlay networks in the private cloud computing environment 102. As illustrated, the logical network manager communicates with the hosts using a management network 128. In some embodiments, the private cloud computing environment 102 may include multiple logical network managers that provide the logical overlay networks. Logical overlay networks comprise logical network devices and connections that are mapped to physical networking resources, e.g., switches and routers, in a manner analogous to the manner in which other physical resources as compute and storage are virtualized. In an embodiment, the logical network manager 124 has access to information regarding physical components and logical overlay network components in the private cloud computing environment 102. With the physical and logical overlay network information, the logical network manager 124 is able to map logical network configurations to the physical network components that convey, route, and filter physical traffic in the private cloud computing environment. In a particular implementation, the logical network manager 124 is a VMware NSX^{®} Manager^{™} product running on any computer, such as one of the hosts 110 or VMs 108A in the private cloud computing environment 102.

Each private cloud computing environment 102 also includes at least one cluster management center (CMC) 126 that communicates with the hosts 110 via the management network 128. In an embodiment, the cluster management center 126 is a computer program that resides and executes in a computer system, such as one of the hosts 110, or in a virtual computing instance, such as one of the virtual machines 108A running on the hosts. One example of the cluster management center 126 is the VMware vCenter Server^{®} product made available from VMware, Inc. The cluster management center 126 is configured to carry out administrative tasks for the private cloud computing environment 102, including managing the hosts in one or more clusters, managing the virtual machines running within each host, provisioning virtual machines, deploying virtual machines, migrating virtual machines from one host to another host, and load balancing between the hosts. In an embodiment, the cluster management center 126 may use VMware vSphere^{®} vMotion^{®} technology to migrate or move virtual machines between hosts in the same cluster of hosts or between different clusters of hosts.

Each private cloud computing environment 102 further includes a hybrid cloud (HC) manager 130A that is configured to manage and integrate computing resources provided by the private cloud computing environment 102 with computing resources provided by one or more of the public cloud computing environments 104 to form a unified "hybrid" computing platform. The hybrid cloud manager is responsible for migrating/transferring virtual machines between the private cloud computing environment and one or more of the public cloud computing environments, and perform other "cross-cloud" administrative tasks. In one implementation, the hybrid cloud manager 130A is a module or plug-in to the cluster management center 126, although other implementations may be used, such as a separate computer program executing in any computer system or running in a virtual machine in one of the hosts 110. One example of the hybrid cloud manager 130A is the VMware^{®} HCX^{™} product made available from VMware, Inc.

In one embodiment, the hybrid cloud manager 130A is configured to control network traffic into the network 106 via a gateway device 132, which may be implemented as a virtual appliance. The gateway device 132 is configured to provide the virtual machines 108A and other devices in the private cloud computing environment 102 with connectivity to external devices via the network 106. The gateway device 132 may manage external public Internet Protocol (IP) addresses for the virtual machines 108A and route traffic incoming to and outgoing from the private cloud computing environment and provide networking services, such as firewalls, network address translation (NAT), dynamic host configuration protocol (DHCP), load balancing, and virtual private network (VPN) connectivity over the network 106.

Each public cloud computing environment 104 of the cloud system 100 is configured to dynamically provide an enterprise (or users of an enterprise) with one or more virtual computing environments 136 in which an administrator of the enterprise may provision virtual computing instances, e.g., the virtual machines 108B, and install and execute various applications in the virtual computing instances. Each public cloud computing environment includes an infrastructure platform 138 upon which the virtual computing environments can be executed. In the particular embodiment of Fig. 1, the infrastructure platform 138 includes hardware resources 140 having computing resources (e.g., hosts 142), storage resources (e.g., one or more storage array systems, such as a storage area network 144), and networking resources (not illustrated), and a virtualization platform 146, which is programmed and/or configured to provide the virtual computing environments 136 that support the virtual machines 108B across the hosts 142. The virtualization platform may be implemented using one or more software programs that reside and execute in one or more computer systems, such as the hosts 142, or in one or more virtual computing instances, such as the virtual machines 108B, running on the hosts.

In one embodiment, the virtualization platform 146 includes an orchestration component 148 that provides infrastructure resources to the virtual computing environments 136 responsive to provisioning requests. The orchestration component may instantiate virtual machines according to a requested template that defines one or more virtual machines having specified virtual computing resources (e.g., compute, networking and storage resources). Further, the orchestration component may monitor the infrastructure resource consumption levels and requirements of the virtual computing environments and provide additional infrastructure resources to the virtual computing environments as needed or desired. In one example, similar to the private cloud computing environments 102, the virtualization platform may be implemented by running on the hosts 142 VMware ESXi^{™}-based hypervisor technologies provided by VMware, Inc. However, the virtualization platform may be implemented using any other virtualization technologies, including Xen^{®}, Microsoft Hyper-V^{®} and/or Docker virtualization technologies, depending on the virtual computing instances being used in the public cloud computing environment 104.

In one embodiment, each public cloud computing environment 104 may include a cloud director 150 that manages allocation of virtual computing resources to an enterprise. The cloud director may be accessible to users via a REST (Representational State Transfer) API (Application Programming Interface) or any other client-server communication protocol. The cloud director may authenticate connection attempts from the enterprise using credentials issued by the cloud computing provider. The cloud director receives provisioning requests submitted (e.g., via REST API calls) and may propagate such requests to the orchestration component 148 to instantiate the requested virtual machines (e.g., the virtual machines 108B). One example of the cloud director is the VMware vCloud Director^{®} product from VMware, Inc. The public cloud computing environment 104 may be VMware cloud (VMC) on Amazon Web Services (AWS).

In one embodiment, at least some of the virtual computing environments 136 may be configured as SDDCs. Each virtual computing environment includes one or more virtual computing instances, such as the virtual machines 108B, and one or more cluster management centers 152. The cluster management centers 152 may be similar to the cluster management center 126 in the private cloud computing environments 102. One example of the cluster management center 152 is the VMware vCenter Server^{®} product made available from VMware, Inc. Each virtual computing environment may further include one or more virtual networks 154 used to communicate between the virtual machines 108B running in that environment and managed by at least one networking gateway device 156, as well as one or more isolated internal networks 158 not connected to the gateway device 156. The gateway device 156, which may be a virtual appliance, is configured to provide the virtual machines 108B and other components in the virtual computing environment 136 with connectivity to external devices, such as components in the private cloud computing environments 102 via the network 106. The gateway device 156 operates in a similar manner as the gateway device 132 in the private cloud computing environments. In some embodiments, each virtual computing environment may further include components found in the private cloud computing environments 102, such as the logical network managers, which are suitable for implementation in a public cloud.

In one embodiment, each virtual computing environments 136 includes a hybrid cloud (HC) manager 130B configured to communicate with the corresponding hybrid cloud manager 130A in at least one of the private cloud computing environments 102 to enable a common virtualized computing platform between the private and public cloud computing environments. The hybrid cloud manager 130B may communicate with the hybrid cloud manager 130A using Internet-based traffic via a VPN tunnel established between the gateways 132 and 156, or alternatively, using a direct connection (not shown), which may be an AWS Direct Connect connection. The hybrid cloud manager 130B and the corresponding hybrid cloud manager 130A facilitate cross-cloud migration of virtual computing instances, such as virtual machines 108A and 108B, between the private and public computing environments. This cross-cloud migration may include "cold migration", which refers to migrating a VM which is always powered off throughout the migration process, "hot migration", which refers to live migration of a VM where the VM is always in powered on state without any disruption, and "bulk migration", which is a combination where a VM remains powered on during the replication phase but is briefly powered off, and then eventually turned on at the end of the cutover phase. The hybrid cloud managers in different computing environments, such as the private cloud computing environment 102 and the virtual computing environment 136, operate to enable migrations between any of the different computing environments, such as between private cloud computing environments, between public cloud computing environments, between a private cloud computing environment and a public cloud computing environment, between virtual computing environments in one or more public cloud computing environments, between a virtual computing environment in a public cloud computing environment and a private cloud computing environment, etc. As used herein, "computing environments" include any computing environment, including data centers. As an example, the hybrid cloud manager 130B may be a component of the HCX-Enterprise product, which is provided by VMware, Inc.

The cloud system 100 further includes a hybrid cloud (HC) director 160, which communicates with multiple hybrid cloud (HC) managers, such as the HC managers 130A and 130B. The HC director 160 aims to enhance operational efficiency by providing a single pane of glass to enable planning and orchestration of workload migration activities across multiple sites, e.g., the private cloud computing environment 102 the virtual computing environment 136, which operate as software-defined data centers (SDDCs). As used herein a workload can be any software process, such as a VM, a container or any virtual computing instance.

The cloud system 100 further includes a site recovery manager 162, which may be part of a site recovery system, to automatically orchestrate failovers and failbacks between source and destination sites. Thus, the site recovery manager may work with other site recovery manager at other sites. In operation, for each protected workload, e.g., a VM, a placeholder workload is created at the destination site and continually updated as the protected workload changes. The placeholder workload for a protected workload is a replica of the protected workload. However, the placeholder workload is disabled or not active until it is needed due to some failure event. As an example, the site recovery manager 162 may be a VMware Site Recovery Manager^{™} product, which is provided by VMware, Inc.

The cloud system 100 also includes an infrastructure automation platform 164 for provisioning and configuring Information Technology (IT) resources and automating the delivery of applications, which may be container-based applications. Consequently, the infrastructure automation platform manages workloads, e.g., VMs, running in an area of the cloud system 100, which may be defined by physical locations of hosts or a defined group of hosts. As part of this management, the infrastructure automation platform needs to keep track of workloads that move to different locations. As an example, the infrastructure automation platform 164 may be a VMware vRealize^{®} Automation^{™} product, which is provided by VMware, Inc.

However, since other management components, such as the cluster management center 126 and the site recover manager 162, may move workloads, e.g., VMs, from one location to another, these movements of the workloads may cause conflicts or errors in the infrastructure automation platform 164 unless these movements are remediated. In order to remediate workloads that are relocated in the cloud system 100 by other management components, the infrastructure automation platform 164 includes a workload remediation system 166, which operates to automatically detect workload movements in the cloud system and reconcile the results of these workload movements.

As described in more detail below, the workload remediation system 166 operates to gather data related to all the workloads running in the area of the cloud system 100 managed by the infrastructure automation platform 164, which can be the entire cloud system or some portion of the cloud system. This managed area may include different public clouds that have accounts in with the infrastructure automation platform. The workload remediation system then detects workloads that have moved or relocated in the managed area by any management component other than the infrastructure automation platform, such as the site recovery manager 162, the cluster management center 126 or the HC director 160. If needed, the workload remediation system reconciles the workloads that have been moved so that the moved workloads can be properly managed by the infrastructure automation platform, which includes deleting moved workloads that should be deleted.

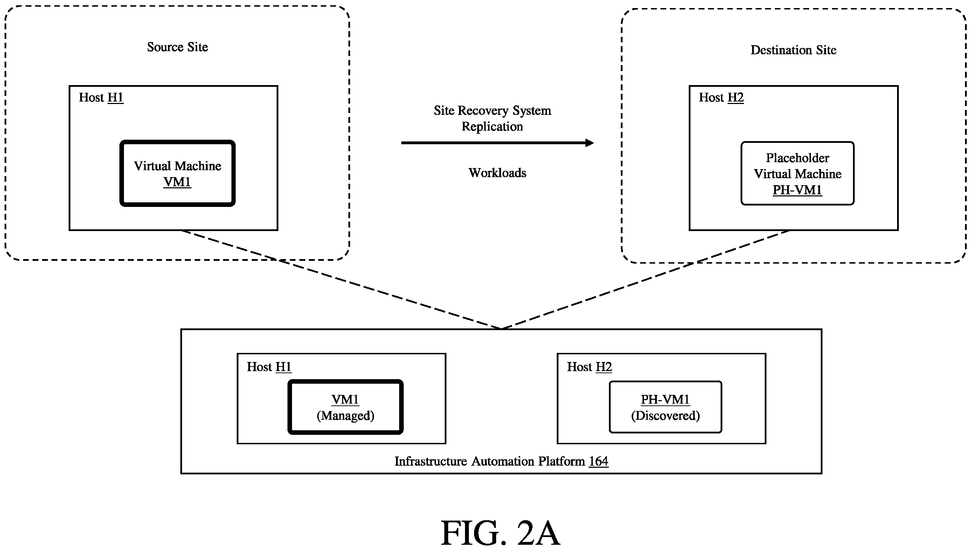

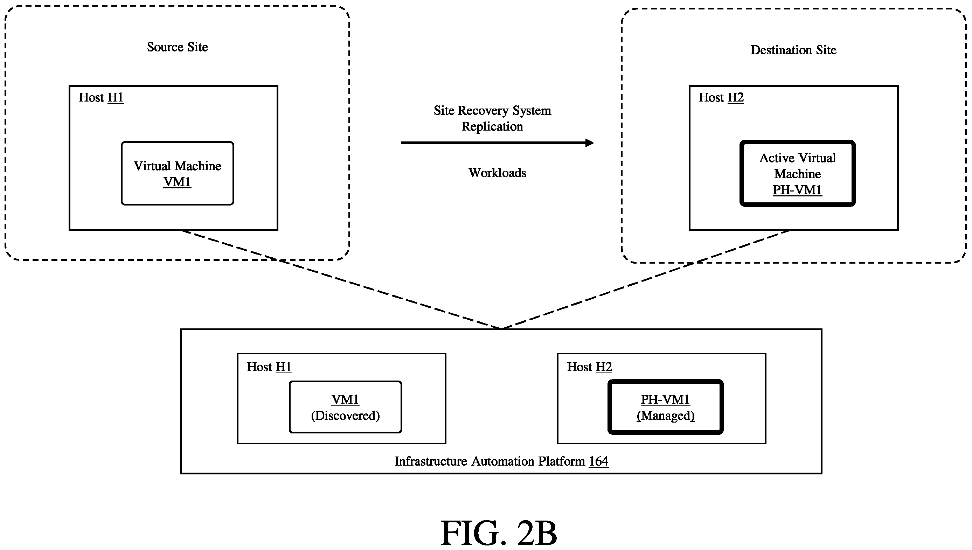

The workload remediation system 166 can detect different workload movements and reconcile the workloads that have been moved. A first example of a workload movement that can be detected and reconciled by the workload remediation system is illustrated in Figs. 2A and 2B. In this example, a workload movement of a virtual machine VM1 is executed by a site recovery system that uses site recovery managers, such as the site recovery manager 162. Before recovery, as illustrated in Fig. 2A, the virtual machine VM1 is located at a host H1 at a source site and a placeholder virtual machine PH-VM1 is located at a host H2 at a destination site. The virtual machine VM1 at the source site is known and managed by the infrastructure automation platform, but the placeholder virtual machine PH-VM1 is discovered by the infrastructure automation platform via the workload remediation system. After recovery, as illustrated in Fig. 2B, the virtual machine VM1 at the source site is not active, and the placeholder virtual machine PH-VM1 at the destination site is now active, essentially functioning as the virtual machine VM1. The active virtual machine PH-VM1 at the destination site is known and managed by the infrastructure automation platform, but the inactive virtual machine VM1 at the source site is discovered by the infrastructure automation platform via the workload remediation system 166. In this example, after recovery, machine metadata is swapped between the virtual machine VM1 and the placeholder virtual machine PH-VM1 such that both machines maintain their selflinks (e.g., workload identifiers) and all the machine data is switched.

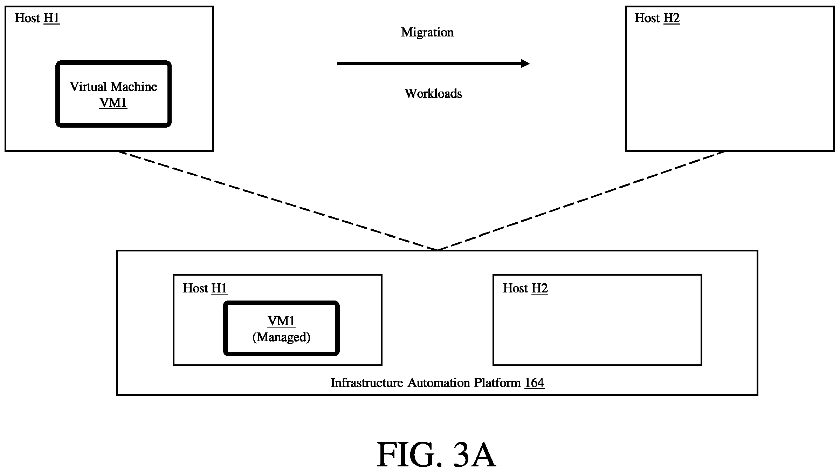

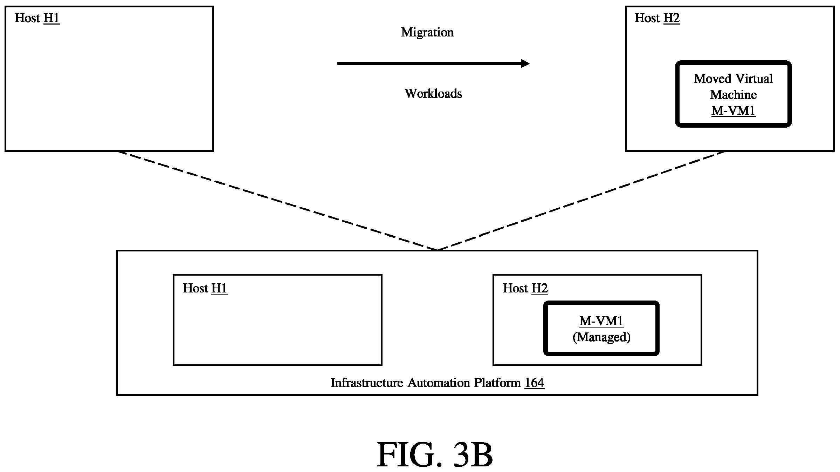

A second example of a workload movement that can be detected and reconciled by the workload remediation system is illustrated in Figs. 3A and 3B. In this example, a workload movement or migration of the virtual machine VM1 is executed by the cluster management center 126. Before migration, as illustrated in Fig. 3A, the virtual machine VM1 is located at the host H1, which can be at any site. The virtual machine VM1 at the host H1 is known and managed the infrastructure automation platform. After migration, as illustrated in Fig. 3B, the virtual machine VM1 has moved to the host H2, which can be the same site as the host H1 or at another site, as a moved virtual machine M-VM1. The moved virtual machine M-VM1 at the host H2 is known and managed by the infrastructure automation platform using the workload remediation system. In this example, after migration, machine metadata are swapped between the original virtual machine VM1 and the moved virtual machine M-VM1 such that both machines maintain their selflinks and all the machine data is switched and the virtual machine VM1 is deleted in the infrastructure automation platform.

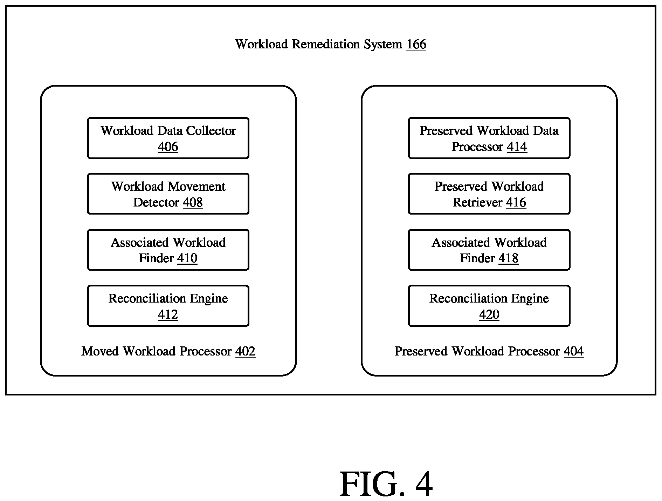

Turning now to Fig. 4, components of the workload remediation system in accordance with an embodiment of the invention are shown. As shown in Fig. 4, the workload remediation system includes a moved workload processor 402 and a preserved workload processor 404. The moved workload processor operates on workloads that have moved. The moved workloads are then reconciled when it is certain that the moved workload should be reconciled, i.e., when an associated workload for the moved workload has been found. However, if it is not certain that the moved workload should be reconciled, i.e., when an associated workload for the moved workload has not been found, then the moved workload is preserved so that the moved workload can be processed again later. The reason for preserving the moved workload is that in certain circumstances the associated workload may take some time to be detected. Thus, a moved workload should not be reconciled, e.g., deleted or updated, without making sure that an associated workload for the moved workload does not exist. The preserved workload processor operates on preserved workloads. The preserved workloads are then reconciled when it is certain that the moved workload should be reconciled, i.e., when an associated workload for the preserved workload has been found. However, if it is not certain that the preserved workload should be reconciled, i.e., when an associated workload for the preserved workload has still not been found, then the preserved workload is preserved for further processing until a predefined threshold has been met, e.g., a predefined period of time that the workload has been preserved or a predefined number of times that the workload has been processed and preserved.

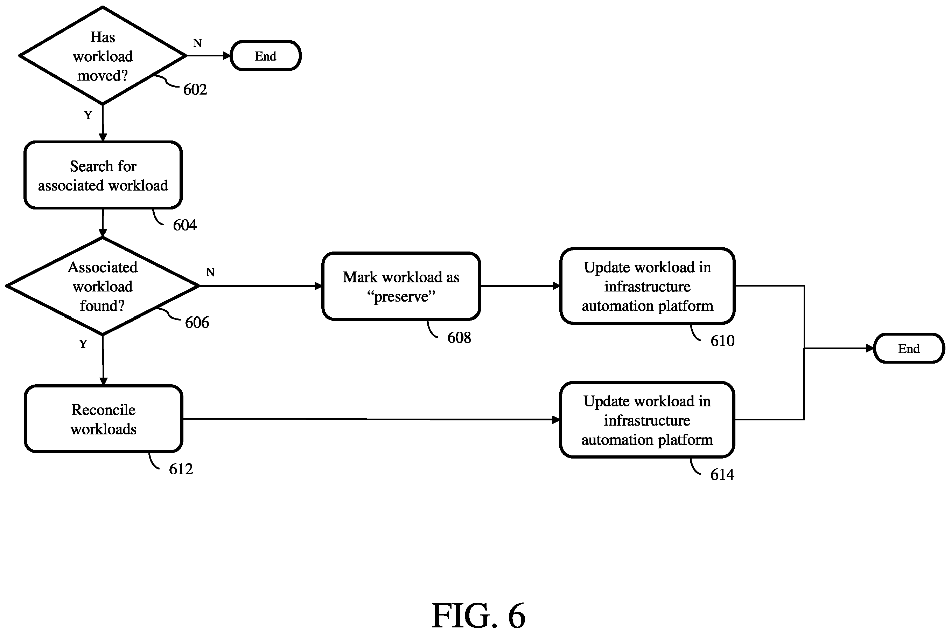

As shown in Fig. 4, the moved workload processor 402 includes a workload data collector 406, a workload movement detector 408, an associated workload finder 410 and a reconciliation engine 412. The workload data collector 406 operates to collect data related to workloads in the managed area of the cloud system 100. In an embodiment, this data may be provided by one or more of the cluster management centers 126 and/or the virtualization managers 152, which may include identifications of workloads that are deleted (from their management) or updated. In some embodiments, the data related to workloads may include state of the workloads in the other management components, such as CMC states, which may include "placeholder", "disabled" and "deleted". The workload movement detector 408 operates to detect workloads that have moved. The associated workload finder 410 operates to try find an associated workload for each of the workloads being processed. In an embodiment, an associated workload for a particular workload is found using two (2) criteria. The first criterion involves using associated accounts for the lookup, which are the accounts that are configured in the infrastructure automation platform 164, to restrict the lookup. The second criterion involves looking for a Universally Unique Identifier (UUID), e.g., an "instanceUUID" used in the VMware vSphere^{®} environment, which is carried over to the new host when the workload is moved. The reconciliation engine 412 operates to either reconcile the moved workloads or preserve the moved workloads depending on whether the associated workloads for the moved workloads have been found. In an embodiment, the workloads are reconciled when both the moved workload and the associated workloads are in a stable or acceptable state. The operations executed by these components are described in more detail below with respect to Figs. 6-8.

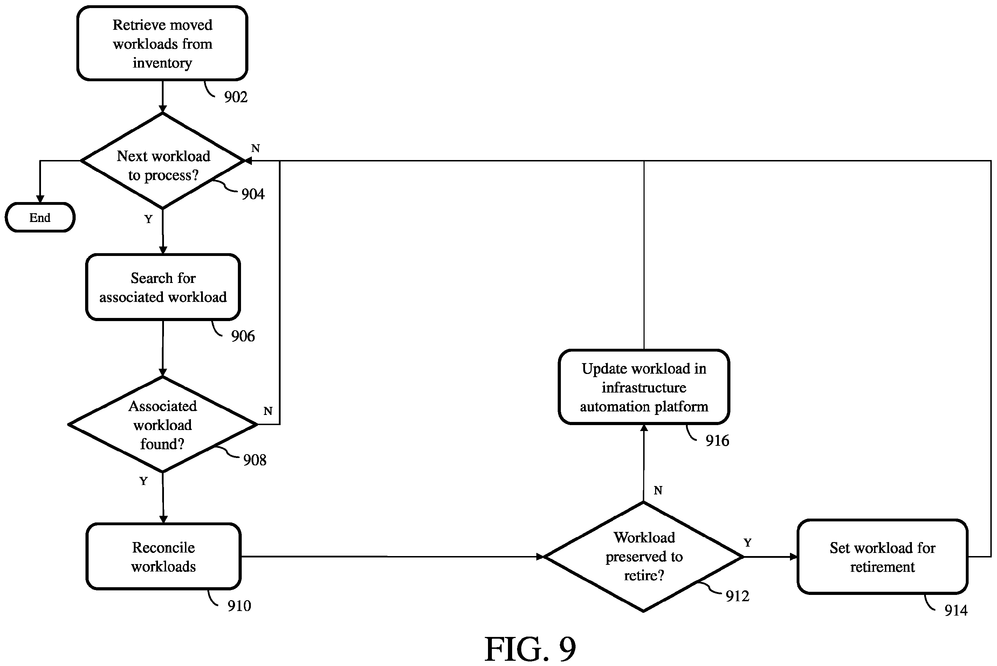

The preserved workload processor 404 includes a preserved workload data processor 414, a preserved movement retriever 416, an associated workload finder 418 and a reconciliation engine 420. The preserved workload data processor 414 operates to process data related to the preserved workloads that have been saved, which may involve accessing the preserved workload data from a database. The preserved movement retriever 416 operates to retrieve the preserved workloads that need to be processed. The associated workload finder 418 operates to try find an associated workload for each of the preserved workloads being processed. The reconciliation engine 420 operates to either reconcile the preserved workloads or further preserve the preserved workloads depending on whether the associated workloads for the moved workloads have been found. The operations executed by these components are described in more detail below with respect to Fig. 9.

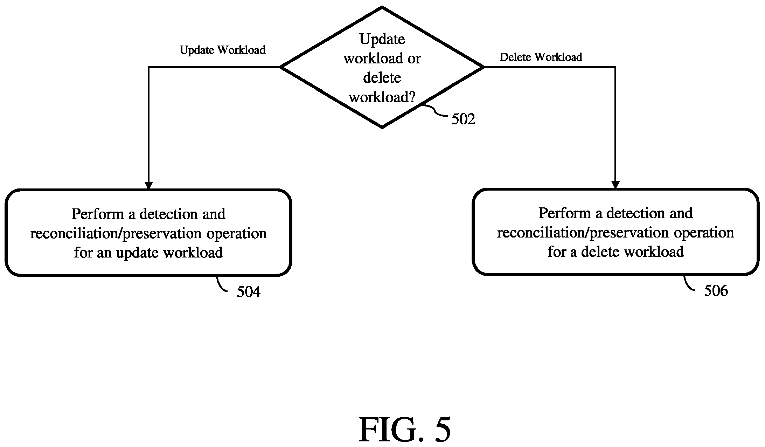

Turning now to Fig. 5, a flow diagram of an overall process of detection and reconciliation/preservation of a moved workload in accordance with an embodiment of the invention is illustrated. As shown in Fig. 5, the process begins at step 502, where a determination is made whether a changed workload is an updated workload or a deleted workload. In this embodiment, only changed or modified workloads are processed since those are the only workloads that may have been moved. A deleted workload is a workload that has been deleted, which may be a workload that has been recovered at another site. An updated workload is a workload, including a workload that was newly deployed, which may be a workload that has been migrated from a different host. The data for the workload is obtained by the workload data collector 406 of the moved workload processor 402.

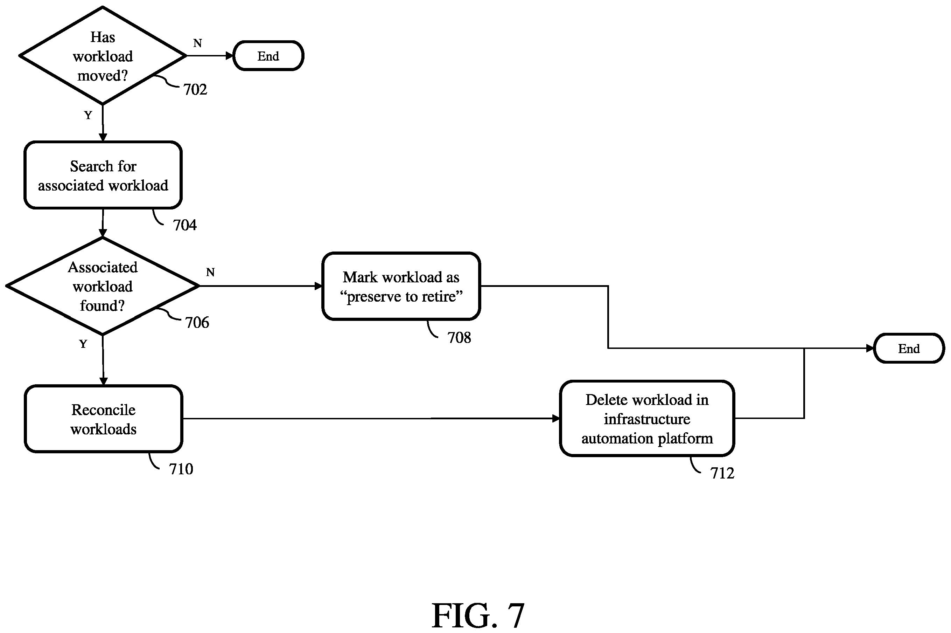

If the workload is an updated workload, then the process proceeds to step 504, where a detection and reconciliation/preservation operation for an updated workload is performed. Step 504 is further described with reference to Fig. 6. However, if the workload is a deleted workload, then the process proceeds to step 506, where a detection and reconciliation/preservation operation for a deleted workload is performed. Step 506 is further described with reference to Fig. 7.

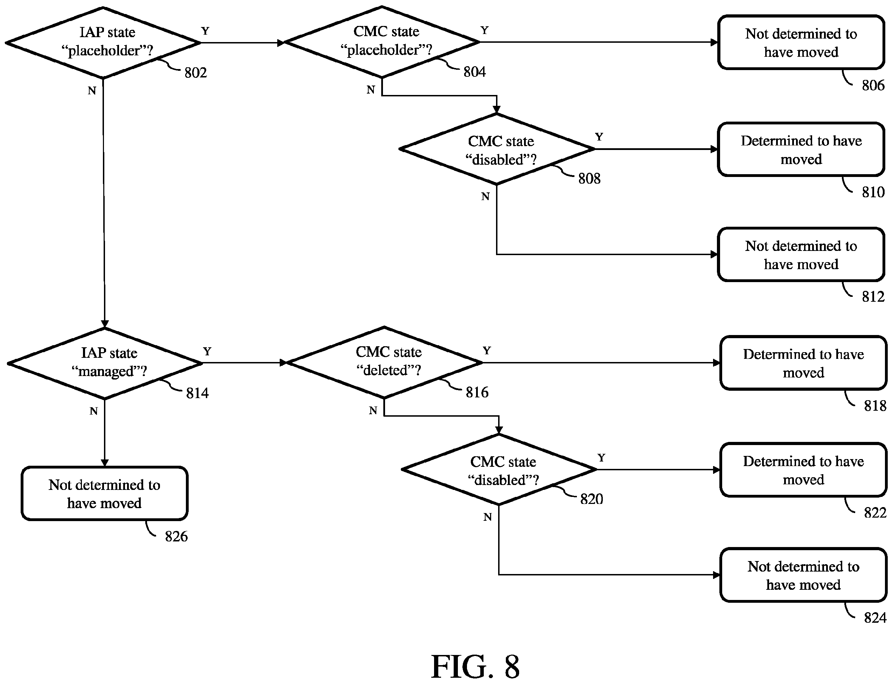

Turning now to Fig. 6, a flow diagram of a detection and reconciliation/preservation operation for an updated workload in accordance with an embodiment of the invention is illustrated. As shown in Fig. 6, the process begins at step 602, where a determination is made by the workload movement detector 408 whether the workload has moved. This step is further described below with respect to Fig. 8. If it is determined that the workload has not moved, then the process then comes to an end.

However, if it is determined that the workload has moved, then the process proceeds to step 604, where a search is performed to find an associated workload by the associated workload finder 410. Next, at step 606, a determination is made whether the associated workload has been found. If the associated workload has not been found, then the process proceeds to step 608, where the workload is marked as "preserve" to indicate that the workload has been processed but has been preserved for further processing. Next, at step 610, the workload is updated in the infrastructure automation platform 164. This process may involve processing the metadata of the workload infrastructure automation platform so that the workload is managed by the infrastructure automation platform. The process then comes to an end.

However, if the associated workload has been found, then the process proceeds to step 612, where the original workload being processed and the associated workload are reconciled. In an embodiment, this step may involve swapping metadata of the workloads in the infrastructure automation platform 164 so that the metadata of the moved workload is now the metadata of the associated workload. In addition, resource links associated with the original workload may be extracted. For example, links to NIC, tags and disks associated with the workload are extracted since these need to be removed due to the swap.

Next, at step 614, the workload is updated in the infrastructure automation platform 164. Again, this process may involve processing the metadata of the workload infrastructure automation platform so that the workload is managed by the infrastructure automation platform. This process may also involve processing the compute description of the workload. The process then comes to an end.

Turning now to Fig. 7, a flow diagram of a detection and reconciliation/preservation operation for a deleted workload in accordance with an embodiment of the invention is illustrated. As shown in Fig. 7, the process begins at step 702, where a determination is made by the workload movement detector 408 whether the workload has moved. This step is further described below with respect to Fig. 8. If it is determined that the workload has not moved, then the process then comes to an end.

However, if it is determined that the workload has moved, then the process proceeds to step 704, where a search is performed to find an associated workload by the associated workload finder 410. Next, at step 706, a determination is made whether the associated workload has been found. If the associated workload has not been found, then the process proceeds to step 708, where the workload is marked as "preserve to retire" to indicate that the workload has been processed but has been preserved for further processing. The process then comes to an end without deleting the workload.

However, if the associated workload has been found, then the process proceeds to step 710, where the original workload being processed and the associated workload are reconciled. In an embodiment, this step may involve swapping metadata of the workloads in the infrastructure automation platform 164 so that the metadata of the moved workload is now the metadata of the associated workload. In addition, resource links associated with the original workload may be extracted. For example, links to NIC, tags and disks associated with the workload are extracted since these need to be removed due to the swap.

Next, at step 712, the workload is deleted in the infrastructure automation platform 164. However, the associated workload is now saved as the active workload. This process may also involve processing the compute description of the associated workload. The process then comes to an end.

Turning now to Fig. 8, a flow diagram of a workload movement detection performed by the workload movement detector 408 in accordance with an embodiment of the invention is illustrated. As shown in Fig. 8, the operation begins at step 802, a determination is made by the workload movement detector whether the infrastructure automation platform (IAP) state of the workload is "placeholder", e.g., a placeholder virtual machine. If the IAP state of the workload is "placeholder", then the operation proceeds to step 804. However, if the IAP state of the workload is not "placeholder", then the operation proceeds to step 814.

At step 804, a determination is made by the workload movement detector 408 whether the cluster management center (CMC) state of the workload is "placeholder". If the CMC state of the workload is "placeholder", then the operation proceeds to step 806, where the workload is not determined to have moved. However, if the CMC state of the workload is not "placeholder", then the operation proceeds to step 808, where a determination is made whether the CMC state of the workload is "disabled".

If the CMC state of the workload is "disabled", then the operation proceeds to step 810, where the workload is determined to have moved (e.g., site recovery secondary workload movement). However, if the CMC state of the workload is nor "disabled", then the operation proceeds to step 812, where the workload is not determined to have moved.

At step 814, a determination is made by the workload movement detector 408 whether the IAP state of the workload is "managed". If the IAP state of the workload is "managed", then the operation proceeds to step 816. However, if the IAP state of the workload is not "managed", then the operation proceeds to step 826, where the workload is not determined to have moved.

At steps 816, a determination is made by the workload movement detector 408 whether the cluster management center (CMC) state of the workload is "deleted". If the CMC state of the workload is "deleted", then the operation proceeds to step 818, where the workload is determined to have moved (e.g., migration). However, if the CMC state of the workload is not "deleted", then the operation proceeds to step 820.

At step 820, a determination is made by the movement detector whether the cluster management center (CMC) state of the workload is "disabled". If the CMC state of the workload is "disabled", then the operation proceeds to step 822, where the workload is determined to have moved (e.g., site recovery primary workload movement). However, if the CMC state of the workload is not "disabled", then the operation proceeds to step 824, where the workload is not determined to have moved.

Turning now to Fig. 9, a flow diagram of a process of reconciliation/preservation of preserved workload executed by the preserved workload processor 404 in accordance with an embodiment of the invention is illustrated. As shown in Fig. 9, the operation begins at step 902, preserved workloads are retrieved from an inventory of preserved workloads, which may be saved in a database accessible to the infrastructure automation platform 164.

Next, at step 904, a determination is made whether there is a next preserved workload to be processed. If there is no next preserved workload to be processed, then the operation comes to an end. However, if there is a preserved workload to be processed, then the operation proceeds to steps 906, where a search is performed to find an associated workload by the associated workload finder 418. Next, at step 908, a determination is made whether the associated workload has been found.

If the associated workload has not been found, then the process proceeds back to step 904 to process the next preserved workload, if there is one that needs to be processed. However, if the associated workload has been found, then the process proceeds to step 910, where the original workload being processed and the associated workload are reconciled. In an embodiment, this step may involve swapping metadata of the workloads in the infrastructure automation platform 164 so that the metadata of the preserved workload is now the metadata of the associated workload. In addition, resource links associated with the preserved workload may be extracted. For example, links to NIC, tags and disks associated with the workload are extracted since these need to be removed due to the swap.

Next, at step 912, a determination is made whether the workload was preserved for retirement. If the workload was preserved for retirement, then the workload is set for retirement, at step 914, so that the workload can be retired/deleted during the next detection and reconciliation/preservation operation. The process then proceeds back to step 904 to process the next preserved workload, if there is one that needs to be processed.

However, if the workload was not preserved for retirement, then the process proceeds to step 916, where the metadata of the preserved workload is updated in the infrastructure automation platform 164 to reflect the associated workload. The process then proceeds back to step 904 to process the next preserved workload, if there is one that needs to be processed.

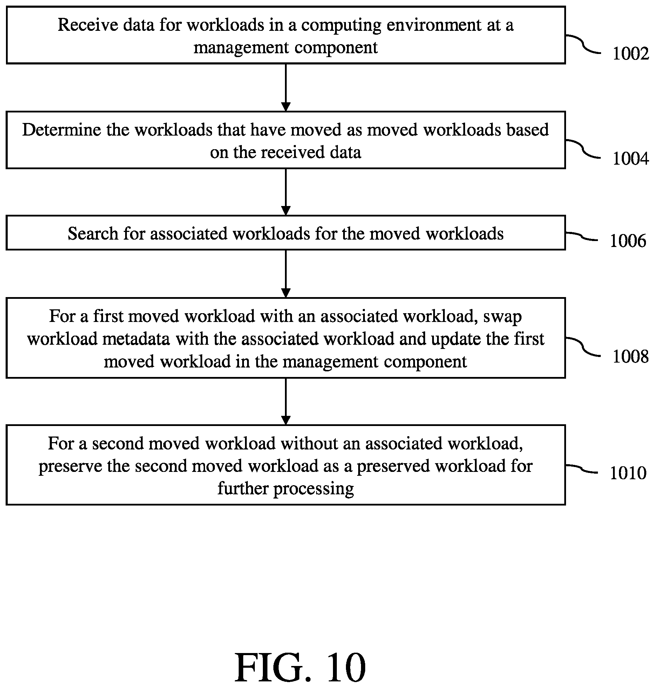

A computer-implemented method for detecting and reconciling moved workloads for a management component in a computing environment, such as the cloud system 100, in accordance with an embodiment of the invention is described with reference to a process flow diagram of Fig. 10. At block 1002, data for workloads in the computing environment is received at the management component. At block 1004, the workloads that have moved are detected as moved workloads based on the received data. At block 1006, associated workloads are searched for the moved workloads. At block 1008, for a first moved workload with an associated workload, workload metadata is swapped with the associated workload and the first moved workload is updated in the management component. At block 1010, for a second moved workload without an associated workload, the second moved workload is preserved as a preserved workload for further processing.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods may be implemented using software instructions stored on a computer useable storage medium for execution by a computer. As an example, an embodiment of a computer program product includes a computer useable storage medium to store a computer readable program that, when executed on a computer, causes the computer to perform operations, as described herein.

Furthermore, embodiments of at least portions of the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The computer-useable or computer-readable medium can be an electronic, magnetic, optical, electromagnetic, infrared, or semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disc, and an optical disc. Current examples of optical discs include a compact disc with read only memory (CD-ROM), a compact disc with read/write (CD-R/W), a digital video disc (DVD), and a Blu-ray disc.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A computer-implemented method for detecting and reconciling moved workloads for a management component in a computing environment, the method comprising:
receiving data for workloads in the computing environment at the management component;
determining the workloads that have moved as moved workloads based on the received data;
searching for associated workloads for the moved workloads;
for a first moved workload with an associated workload, swapping workload metadata with the associated workload and updating the first moved workload in the management component; and
for a second moved workload without an associated workload, preserving the second moved workload as a preserved workload for further processing.

2. The method of claim 1, wherein
when the first moved workload is indicated as being a deleted workload in the received data,
deleting the workload after swapping the workload metadata with the associated workload.

3. The method of claim 1 or 2, wherein
when the second moved workload is indicated as being a deleted workload in the received data,
preserving the second moved workload for retirement so that the second moved workload can be subsequently deleted when an associated workload is found during further processing.

4. The method of any one of the claims 1 to 3, further comprising
deleting the workloads indicated as being deleted workloads in the received data that are not determined to have moved.

5. The method of any one of the claims 1 to 4, further comprising
processing preserved workloads to determine whether associated workloads for the preserved workloads can be found.

6. The method of any one of the claims 1 to 5, wherein
determining the workloads that have moved includes
determining a workload has moved when the workload is indicated as being a placeholder workload in the managed component and is indicated as being disabled in the received data.

7. The method of any one of the claims 1 to 5, wherein
determining the workloads that have moved includes
determining a workload has moved when the workload is indicated as being a managed workload in the managed component and is indicated as being deleted or disabled in the received data.

8. The method of any one of the claims 1 to 7, wherein
the workloads are virtual machines.

9. A non-transitory computer-readable storage medium containing program instructions for detecting and reconciling moved workloads for a management component in a computing environment, wherein execution of the program instructions by one or more processors causes the one or more processors to control and/or carry out a method as set forth in any one of the method preceding claims.

10. A system comprising:
memory; and
one or more processors configured to control and/or carry out a method as set forth in any one of the method preceding claims.
